# EUROPÄISCHE PATENTSCHRIFT

(11) **EP 0 747 111 B1**
(45) Veröffentlichungstag und Bekanntmachung des Hinweises auf die Patenterteilung: **16.08.2001**
(21) Anmeldenummer: 96106747.7
(22) Anmeldetag: 29.04.1996
(51) Int. Cl.: B01D 61/22, B01D 61/14

(54) **Verfahren zur Erhöhung der Filtrationsleistung von Querstromfiltern in Modulen von Filteranlagen**
Method for enhancing the filtration performance of cross-flow filters in modules from filtration plants
Procédé pour augmenter la performance de filtration des filtres à courant transversal dans les modules des installations de filtration

(30) Priorität: 08.05.1995 CH 131995
(43) Veröffentlichungstag der Anmeldung: 11.12.1996
(73) Patentinhaber: BUCHER-GUYER AG Maschinenfabrik, CH-8166 Niederweningen (CH)
(72) Erfinder: Hartmann, Eduard, 5425 Schneisingen (CH)

(56) Entgegenhaltungen:
- EP-A- 0 137 877
- EP-A- 0 599 281
- WO-A-94/09888
- DE-A- 3 716 363
- US-A- 4 886 602
- US-A- 5 047 154
- PATENT ABSTRACTS OF JAPAN vol. 9, no. 32 (C-265) [1755] , 9.Februar 1985 & JP-A-59 179110 (NITTO DENKI KOGYO KK), 11.Oktober 1984,

## Beschreibung

Die Erfindung betrifft ein Verfahren und eine Vorrichtung zur Erhöhung der Filtrationsleistung von Querstromfiltern in Modulen von Filteranlagen, bei denen das Retentat und das Permeat Kammern durchlaufen und eine Transmembran-Druckdifferenz zwischen den Kammern auf beiden Seiten der Querstromfilter einstellbar ist.

Bekannte derartige Filteranlagen nach dem Querstrom- oder Crossflow-Prinzip dienen zur Abtrennung von schwebenden Feststoffen oder colloidalen Stoffen aus Flüssigkeiten, wie Fruchtsäfte, Fruchtmaischen, Abwässer, Ölemulsionen, industielle Prozesströme usw.

Bei den bekannten Querstrom-Filtern überströmt das zu filtrierende Medium eine filtrierende Schicht parallel zu ihrer Oberfläche mit Geschwindigkeiten bis ca. 8 m/s und übt dabei einen Druck auf die Filterschicht aus. Infolge einer dadurch entstehenden Druckdifferenz zwischen den beiden Seiten der Filterschicht durchdringt ein Teil der flüssigen Phase des Mediums die Schicht als Filrat. Dieses Filtrat wird als Permeat und die zurückgehaltene Fraktion als Retentat bezeichnet. Bekannte Filterschichten haben Poren mit Durchmessern im Bereich von einigen mm bis zu (10 hoch -10) m. Im Bereich der engeren Poren werden die Filter als Membranen bezeichnet.

Im Bereich dieser engeren Trenngrenzen für das Retentat verwendet man die Membranen zur Mikrofiltration, Ultra-, Nano- oder Umkehrosmose-Filtration, wobei die Trenngrenze in dieser Reihenfolge abnimmt. Als Werkstoffe für die Filtermembranen bekannt sind Metall, Kunststoffe und keramisches Material. Konstruktiv sind solche Filter meistens so ausgeführt, dass in Rohren als Gehäuse eine Vielzahl von Einzelfiltern angeordnet ist. Diese Rohreinheiten werden als Module bezeichnet.

Bei der Querstromfiltration ist das Problem bekannt, dass die Filterschichten bei längerer Betriebszeit durch Verblocken der Poren ihre Leistung beim Permeatdurchsatz verlieren. Die Aufgabe, dies zu verhindern, konnte mit bekannten Verfahren und Anlagen nur unvollständig gelöst werden. Je nach zu verarbeitendem Produkt und Betriebsbedingungen verstopfen die Poren im Filter relativ rasch, und es werden bereits nach kurzer Betriebszeit besondere Reinigungsmassnahmen erforderlich. Eine Oberflächenschicht mit kompliziertem Aufbau bildet sich so auf der Membranoberfläche und behindert den Permeatdurchfluss durch die Membrane. Einen entscheidenden Einfluss auf dieses Verstopfungsverhalten hat die schon erwähnte Druckdifferenz zwischen Retentat und Permeat auf den beiden Seiten der Filterschichten. Diese Differenz ist gemäss WO-A1-94/09888 (Dow Chemical) als Transmembrandruck (TMP) bekannt.

Mikrofiltration und Ultrafiltration arbeiten mit Modulen der genannten Art, welche in Serien hintereinander geschaltet sind. Dabei muss das Produkt am Eingang des ersten Modules einen hinreichend hohen Druck haben, damit wegen der Druckverluste des Retentates in den Modulen auch im letzten Modul ein genügend hoher Transmembrandruck (TMP) für die Abtrennung des Permeates zur Verfügung steht. Um unter solchen Bedingungen den Filtrationsfluss durch das Filtermedium im zeitlichen Mittel zu erhöhen, wird gemäss US-5,047,154 (Comstock et al.) der Filtrationsfluss während des ganzen Filtrationslaufes auf einem vorgewählten, wesentlich konstanten Wert gehalten. Dies geschieht, indem man durch variable Drosselung auf der Filtratseite des Filters einen variablen Druck erzeugt und diesen dann reduziert.

Zur Verbesserung der Filtrationsleistung wurde gemäss WO-A1-94/09888 (Dow Chemical) auch schon vorgeschlagen, in einem Querstrom-Filtrationsmodul einen wesentlich stabilen Filtrationsfluss dadurch zu erzeugen, dass der Transmembrandruck (TMP) anfänglich niedrig gehalten, dann allmählich bis zu dem Punkt erhöht wird, wo Prozessparameter wie Konzentratdruck und Permeatdruck beginnen sich zu verändern, und dass dann der Transmembrandruck (TMP) erniedrigt wird bis zu einem Punkt, wo sich die Prozessparameter zeitlich nicht mehr verändern. Damit kann über mehrere Stunden bis Tage ein Verblocken der Membranen verhindert werden.

Im Hinblick auf die genannten Druckverluste des Retentates in den Modulen wurde gemäss US-4,886,602 (Kuehne et al.) vorgeschlagen, eine maximale Ausbeute erwünschter Permeate bei hohem Fluss dadurch zu erreichen, dass man wenigstens zwei Module zur Mikrofiltration oder Ultrafiltration in Serie schaltet, das Retentat im ersten Modul mit einem ersten Druck auf die Trennmembran gibt, das Retentat durch jedes der in der Serie nachfolgenden Module mit einem geringeren Druck als im vorhergehenden Modul führt und in jedem Modul den Permeatdruck so einstellt, dass er für jedes Modul unterschiedlich ist. Man erreicht dadurch schon einen für alle Module wesentlich gleichen Transmembrandruck (TMP). In Dialyseanlagen wird in Membranmodulen ein sehr geringes Druckgefälle zwischen Retentatseite und Permeatseite konstant gehalten oder nach Möglichkeit ganz vermieden. Der Stofftransport erfolgt vorallem durch Diffusion. Lediglich zur Erzeugung eines Konzentrationsgefälles zwischen Retentat- und Permeatseite werden die Diffusionsmembranen permeatseitig mit einem Lösungsmittel gespült.

Gemäss den bekannten vorgeschlagenen Verfahren und Vorrichtungen muss an jedem Modul mindestens ein Transmembrandruck (TMP) gemessen werden und für dessen Änderung ein Regelventil angeordnet sein. Bei Filteranlagen mit mehreren Passen und bis zu 160 Modulen ist dies mit einem unwirtschaftlich hohen Aufwand verbunden. Ausserdem wäre auch so nicht an allen Stellen der Querstromfilter ein gleicher optimaler Transmembrandruck (TMP) zu erreichen, weil man mit der Drosselung des Permeatabflusses nur einen Permeatdruck pro Modul einstellen kann. Das Retentat hat aber meistens eine hohe Viskosität. Durchströmt es ein Modul mit hoher Geschwindigkeit, so ergeben sich wegen der Strömungsverluste über die Länge eines Moduls Unterschiede zwischen Retentat-Eingangsdruck und Retentat-Ausgangsdruck an jedem Modul, an die der Permeatdruck nicht angepasst werden kann.

Als Folge dieser Umstände wird auf die Regelung des TMP verzichtet oder es kommt in der Praxis trotz Regelung des Permeatgegendruckes immer noch zu vorzeitigen Verstopfungen der Membranporen und zur Bildung von Deckschichten auf der Membranoberfläche, welche sich ungünstig auswirken. Die genannten Mängel der bekannten Regelung des Permeatgegendruckes haben dazu geführt, dass dieses Verfahren industriell kaum genutzt wird.

Der Erfindung liegt deshalb die Aufgabe zugrunde, ein Verfahren und eine Vorrichtung zur Erhöhung der Filtrationsleistung von Querstromfiltern in Modulen von Filteranlagen anzugeben, durch welche die genannten Nachteile der bekannten Anlagen behoben werden. Es ist auch in beliebig grossen Querstromfilteranlagen mit vergleichsweise geringem Aufwand die Filtrationsleistung zu erhöhen und über mehrere Tage annähernd stationär zu halten.

Gemäss der Erfindung wird die Lösung dieser Aufgabe bei einem Verfahren der eingangs genannten Art dadurch erreicht, dass die Kammern für das Permeat in einen Permeatkreislauf geschaltet werden, dass der Verlauf des Strömungswiderstandes im Permeatkreislauf so gewählt wird, dass er dem Strömungswiderstand in den Kammern für das Retentat entspricht und dass der permeatseitige Druck, insbesondere der minimale Druck und der Permeatdurchfluss im Permeatkreislauf so eingestellt werden, dass der Druckverlauf im Retentat längs der Querstromfilter durch den Druckverlauf im Permeat nachgebildet wird und die Transmembran-Druckdifferenz längs der Querstromfilter an wenigstens einer Stelle jedes Filters einen vorgegebenen Wert annimmt.

Eine Vorrichtung zur Durchführung dieses Verfahrens zeichnet sich aus durch einen Permeatkreislauf, an welchen die Permeatkammern eines Modules oder mindestens einer Serie von Modulen angeschlossen sind, wobei die Kammern jedes Modules für das Permeat über Leitungen in Serie verbunden sind und die Leitungen eine oder mehrere Pumpen zur Umwälzung des Permeates aufweisen, sowie durch Mittel zum Messen der Eingangs- und Ausgangsdrücke von Permeat und Retentat in den Querstromfiltern.

Eine alternative Vorrichtung zur Durchführung des Verfahrens zeichnet sich aus durch einen Permeatkreislauf, an welchen die Permeatkammern der Module einer Serie von mindestens zwei Modulen angeschlossen sind, wobei die Kammern je zweier Module für das Permeat durch je eine Teilleitung des Permeatkreislaufes verbunden sind, welche zum Herbeiführen von Soll-Drücken in den Kammern geeignete Strömungswiderstände aufweist, und wobei der Permeatkreislauf eine oder mehrere Pumpen zur Umwälzung des Permeates umfasst, sowie durch Mittel zum Messen der Eingangs- und Ausgangsdrücke von Permeat und Retentat in den Querstromfiltern der Module.

Eine vorteilhafte Ausgestaltung der Vorrichtung umfasst eines oder mehrere Module im Permeatkreislauf, welche an ihrer Retentat-Einlaufseite bzw. Retentat-Auslaufseite je mindestens einen Permeatanschluss aufweisen, durch die das Permeat beim Durchströmen der Permeatseiten der Module ein- bzw. austritt.

Die Verwendung eines offenen oder geschlossenen Permeatkreislaufes mit zwangsweiser Umwälzung hat den wesentlichen Vorteil, dass dadurch auf der Permeatseite der Module als Einzelmodule oder in einer Serienschaltung permeatseitige Strömungsverluste auftreten, welche nach Betrag und Verlauf in Längsrichtung der Module weitgehend mit den unvermeidlichen Strömungsverlusten des Retentatstromes auf der gegenüberliegenden Seite der Filter übereinstimmen. Damit wird es möglich, in einem oder mehreren Modulen gleichzeitig den Transmembrandruck (TMP) entlang eines Moduls oder über mehrere Module in Serie auf nahezu gleicher Höhe zu halten. Eine solche verbesserte Regelung führt zu einer wesentlichen Verbesserung der Permeat-Flussleistung und des Betriebes in der stationären Betriebsphase.

Eine Membranverschmutzung kann weitgehend vermieden werden, sodass sehr lange unterbrechungsfreie Betriebszeiten (bei Fruchtsaft mehrere Tage) ohne Reinigung der Membranen oder Filter möglich sind. Der erzwungene Permeatkreislauf erlaubt auch, die Regelung des Transmembrandruckes (TMP) mit einem sehr kleinen Vorrichtungsaufwand durchzuführen. Für 25 in Serie gefahrene Module genügen z.B. zwei Messeinrichtungen für die Druckdifferenz, ein Regelventil und eine regelbare Förderpumpe. Ohne einen erzwungenen Kreislauf müssten mindestens 25 Messeinrichtungen für die Druckdifferenz und 25 Regelventile eingesetzt werden, um eine nahezu vergleichbar gute Regelung des Transmembrandruckes (TMP) zu erreichen.

Weitere Merkmale und vorteilhafte Ausgestaltungen der Erfindung sind den Patentansprüchen zu entnehmen.

Ausführungsbeispiele der Erfindung sind in der folgenden Beschreibung und den Figuren der Zeichnung näher erläutert. Es zeigen:
Fig. 1 ein Schema eines erfindungsgemässen Filtrationsmoduls mit Öffnungen für Retentat und Permeat an beiden Enden,
Fig. 2 den Druckverlauf längs eines Querstromfilters in einem Filtrationsmodul gemäss Fig. 1,
Fig. 3 ein Schema einer Membranfilteranlage mit mehreren Filtrationsmodulen gemäss Fig. 1 in Serie,
Fig. 4 den Druckverlauf längs einer Serie von drei Filtrationsmodulen gemäss Fig. 3,
Fig. 5 ein Schema einer Membranfilteranlage mit mehreren Filtrationsmodulen und modulweiser Anpassung des Permeatdruckes,
Fig. 6 ein Schema einer Filteranlage zur Verarbeitung stark feststoffhaltiger Produkte, und
Fig. 7 ein Schema einer Schneckenpresse mit Vorrichtungen zur Durchführung des erfindungsgemässen Verfahrens zur Erhöhung der Filtrationsleistung.

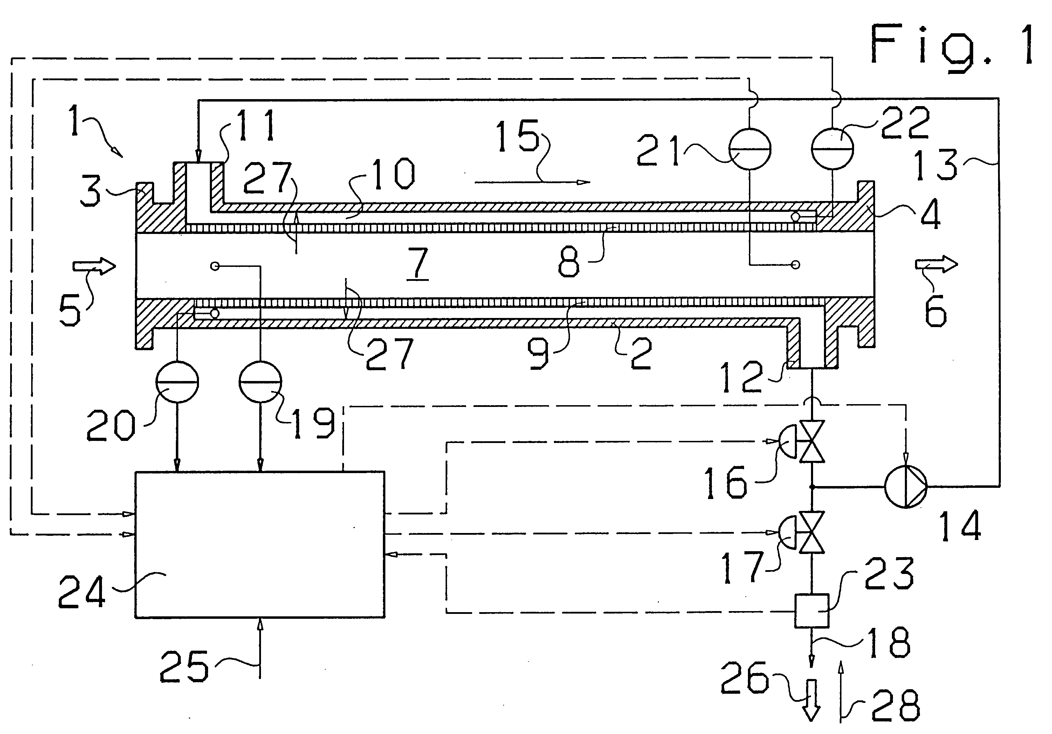

Wie Fig. 1 schematisch zeigt, umfasst ein Filtrationsmodul 1 ein rohrförmiges Gehäuse 2. Die Enden 3, 4 des Gehäuses 2 sind als Anschlussflansche ausgebildet, über welche das zu filtrierende Produkt 7 am Ende 3 zu- und am Ende 4 weitergeleitet wird, wie es die Pfeile 5, 6 symbolisieren. Der zylindrische Kanal 8 für den Durchlauf des Produktes 7 ist wie ersichtlich relativ weit ausgeführt, um den Strömungsverlust klein zu halten, damit das Produkt 7 genügend Druck behält, um noch nachfolgende Filtrationsmodule zu durchlaufen. Die Wand des Kanales 8 ist in an sich bekannter Art als Filtrationsmembran 9 mit einer Vielzahl porenartiger Kanäle ausgebildet, durch welche das Filtrat vom Produkt 7 abgetrennt wird und in eine aussenliegende Kammer 10 gelangt, wie die Pfeile 27 andeuten. Die gröberen Anteile des Produktes 7 werden also im Kanal 8 als Retentat zurückgehalten, während der Rest die Membran 9 als Permeat durchdringt und sich in der Kammer 10 sammelt.

Wie Fig. 1 zeigt, weist die Kammer 10 für das Permeat zwei Anschlüsse 11, 12 auf. Wie eine Leitung 13 symbolisiert, ist die Kammer 10 in einen Permeatkreislauf geschaltet, welcher am Anschluss 11 ein- und am Anschluss 12 wieder austritt. In diesem Kreislauf wird das Permeat von einer Pumpe 14 so umgewälzt, dass seine Strömungsrichtung, wie der Pfeil 15 andeutet, gleichsinnig mit jener des Retentates auf der anderen Seite der Membran 9 ist. Nach dem Ausgangsanschluss 12 der Permeatkammer 10 durchläuft der Permeatkreislauf ein Servoventil 16 zur Verwendung bei einer Rückspülung. Ausserdem ist zwischen Servoventil 16 und Pumpe 14 über ein weiteres Servoventil 17 eine Ausgangsleitung 18 zur Ableitung des Permeates aus dem Permeatkreislauf angeschlossen, wie der Pfeil 26 zeigt.

Nahe dem Ende 3 am Eingang des Filtrationsmodules 1 ist eine Druckmessonde 19 im Retentat und eine Druckmessonde 20 im Permeatkreislauf angeordnet. Ähnlich sind nahe dem Ende 4 am Ausgang des Filtrationsmodules 1 eine Druckmessonde 21 im Retentat und eine Druckmessonde 22 im Permeatkreislauf angeordnet. Schliesslich ist in der Ausgangsleitung 18 für das Permeat ein Durchflussmesser 23 montiert. Wie Fig. 1 zeigt, sind die Ausgangssignale der Druckmessonden 19, 20, 21, 22 und des Durchflussmessers 23 einer Regelstufe 24 zugeführt, welche über eine Leitung 25 mit dem Netz zur Stromversorgung verbunden ist. Wie dargestellt, wirkt die Regelstufe 24 über entsprechende Leitungen auf die Servoventile 16, 17 und die Pumpe 14 ein.

Mit der soweit beschriebenen Vorrichtung lässt sich durch Regelung des Permeatdurchflusses im Kreislauf über die geregelte Pumpe 14 die Druckdifferenz im Permeat zwischen den Druckmessonden 20 und 22 infolge des Strömungsverlustes in der Permeatkammer 10 einstellen. Das Druckniveau im Permeatkreislauf durch die Leitung 13, Kammer 10 und Pumpe 14, z.B. der Minimaldruck, ist durch den Permeatabfluss an der Ausgangsleitung 18 über das Servoventil 17 einstellbar, wobei sich die Werte an den Druckmessonden 20, 22 ändern, jedoch deren Differenz konstant bleibt.

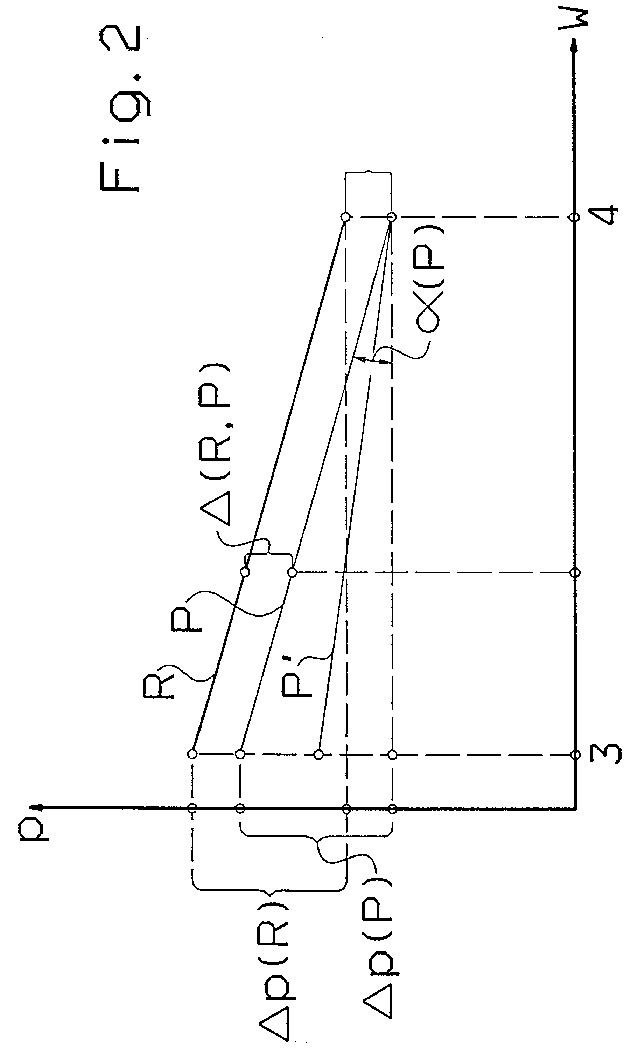

Fig. 2 zeigt den Druckverlauf in der Anlage gemäss Fig. 1 im Retentat und Permeat im Einzelnen. Die horizontale Achse des Diagramms zeigt den Weg W durch das Filtrationsmodul 1 von den Druckmessonden 19, 20 am Ende 3 bis zu den Druckmessonden 21, 22 am anderen Ende 4. Auf der vertikalen Achse sind die Druckwerte p aufgetragen. Die Linie R gibt den Druckverlauf im Retentat wieder, welcher durch dessen vorgegebene Fliessgeschwindigkeit v(R) gegeben ist und einen Druckverlust Δp(R) zur Folge hat. Die Linie P zeigt einen Druckverlauf im Permeat, dessen Druckverlust Δp(P) durch die Fliessgeschwindigkeit v(P) des Permeates über Ventil 16 und Pumpe 14 gleich Δp(R) eingestellt ist. Eine geringere Fliessgeschwindigkeit v(P) würde zu einem Druckverlauf P' des Permeates führen, wobei der minimale Druck am Ausgang-Ende 4 gleich bleibt.

Damit ergibt sich über den ganzen Weg W ein gleichbleibender Transmembrandruck (TMP) als Differenz Δ(R,P) zwischen Retentat R und Permeat P. Die Grösse von Δ(R,P) ist durch das Niveau der Linie P über das Drosselventil 17 (Fig. 1) einstell- und regelbar. In Abhängigkeit von der mit dem Durchflussmesser 23 gemessenen Permeatleistung kann man mit der Regelstufe 24 die Grösse des Transmembrandruckes (TMP) zweckmässig so einregeln, dass die Permeatleistung ein Maximum erreicht.

Im geregelten Betrieb der Anlage wirkt vorzugsweise das Servoventil 17 auf den Permeatdruck p(P) und damit auf den Transmembrandruck (TMP) Δ(R,P) im Bereich des Endes 4 des Moduls 1 am Austritt. Die in ihrem Volumenstrom geregelte Pumpe 14 hingegen wirkt zusätzlich auf den Transmembrandruck (TMP) Δ(R,P) im Bereich des anderen Endes 3 des Moduls 1 am Eingang. Der Neigungswinkel α(P) der Linie P des Druckverlaufes im Permeat gemäss Fig. 2 kann also durch Änderung der Durchflussmenge im Permeatkreislauf verändert werden. Erhöht man die permeatseitigen Fliesswiderstände im Modul 1 z.B. durch Einbau lokalisierter oder gleichmässig verteilter Strömungswiderstände, so lassen sich Durchflussmenge im Permeatkreislauf und Energieverbrauch der Pumpe 14 reduzieren. Diese Fliesswiderstände lassen sich auch dadurch erhöhen, dass man die Filtermembranen 9 gemäss Fig. 1 mit dem Permeat spiralartig überströmt.

Wenn man das Ventil 16 im Permeatkreislauf zur Einstellung eines negativen TMP Retentat-Permeat drosselt und gleichzeitig das Ventil 17 für die Ausgangsleitung 18 öffnet, kann man mit der drehzahlgeregelten Pumpe 14 durch die Leitung 18 von aussen dem Permeatkreislauf Permeat oder Spülflüssigkeit zuführen, wie der Pfeil 28 in Fig. 1 andeutet. Dabei hält die Pumpe 14 den Durchfluss konstant. Es entsteht dann ein über die Länge des Moduls 1 konstanter Überdruck von der Permeatkammer 10 zum Retentat 7, wodurch Permeat oder Spülwasser zur Gegenspülung auf die Retentatseite strömt. Dies erlaubt eine sehr rasche Reinigung der Poren in der Filtermembran 9, sowie eine Entfernung von Deckschichten, sogenannten Sekundärmembranen, die sich durch Ansammlung von höhermolekularen Stoffen auf der Membran 9 gebildet haben. Bei diesem Verfahren lässt sich das Druckgefälle vom Permeat zum Retentat gut kontrollieren und auf einem konstanten geringen Wert halten. Dies ermöglicht vorteilhaft, die Gefahr der Ablösung und Zerstörung der meist sehr dünnen, retentatseitig auf einem Träger befestigten Primärmembrane 9 äusserst gering zu halten.

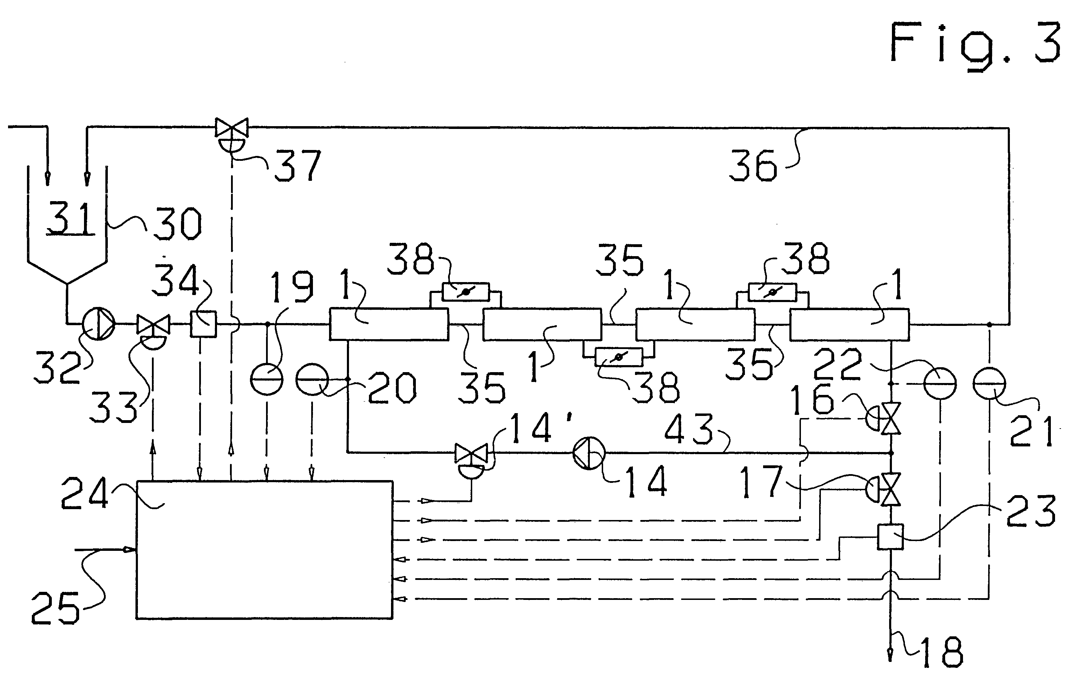

Fig. 3 zeigt schematisch eine Membranfilteranlage, bei der mehrere Module 1 mit Querstromfiltern der in Fig. 1 gezeigten Art in einem Permeatkreislauf in Serie geschaltet sind. Ein in einen Behälter 30 zugeführtes Produkt 31 gelangt über eine Umwälzpumpe 32, ein Servoventil 33 und einen Durchflussmesser 34 in die Retentatkammer des ersten Moduls 1. Über Verbindungsleitungen 35 gelangt das Produkt dann durch die Retentatkammern der weiteren Module bis zum Ende des letzten Moduls 1. Von diesem Ende wird das Retentat über eine Rückführleitung 36 und ein Servoventil 37 in den Behälter 30 zurückgeführt.

Diese Anlage ist für einen Batch-Betrieb bestimmt, d.h. eine bestimmte Menge des Produktes 31 verbleibt nach dem Befüllen des Behälters 30 zur Filtration im RetentatKreislauf. Erst nach Ende eines Filtrationszyklus wird das entsaftete Retentat aus der Anlage entfernt und der Behälter 30 mit frischem Produkt befüllt. Wie bei dem in Fig. 1 gezeigten Ausführungsbeispiel weisen die Module 1 gemäss Fig. 3 je zwei Anschlüsse für das Permeat auf, welche der Verbindung der Permeatkammern mit den Permeatkammern der vorhergehenden und nachfolgenden Module 1 in einen Permeatkreislauf dienen. In diese Verbindungen sind nun Drosseln 38 eingefügt, um eine Anpassung des Druckverlaufes im Permeatkreislauf an jenen im Retentatkreislauf zu ermöglichen.

Weil der Durchflusswiderstand der Permeatkammern in den Modulen 1 sehr gering und ein Einbau zusätzlicher Widerstände in die Module 1 schwierig ist, passt man mit Vorteil den Permeatdruck mit den Drosseln 38 an. Damit ist zwar kein konstanter Transmembrandruck (TMP) über die Länge jedes Moduls 1 erreichbar, bei einer grossen Zahl Module 1 in einer Serie kann man aber mit relativ geringem Aufwand einen mittleren TMP mit geringen Schwankungen über die Länge der gesamten Serie erreichen. Sogenannte Mehrpassanlagen weisen mehrere Serien von Modulen der zu Fig. 3 beschriebenen Art als parallel geschaltete Passe auf. In diesem Falle sind auch die Serien von Permeatkammern durch gemeinsame Zu- und Abführungen parallel versorgt, sodass Mess- und Regelorgane zur Druckanpassung repräsentativ für einen der parallelen Passe genügen. Für eine bessere Anpassung kann man auch hier die Drosseln 38 für jeden Einzelpass einstell- oder regelbar ausführen. In der Anlage gemäss Fig. 3 ist das Retentat über die Leitung 36 und das Permeat über eine Leitung 43 in je einem Kreislauf rückgeführt. Bei kontinuierlich arbeitenden Anlagen ohne Batch-Betrieb entfällt die Rückführung des Retentates über die Leitung 36 in den Behälter 30.

Wie zu Fig. 1 erklärt, sind auch im Ausführungsbeispiel gemäss Fig. 3 am Eingang des ersten Moduls 1 Druckmessonden 19 bzw. 20 und am Ausgang des letzten Moduls 1 Druckmessonden 21 bzw. 22 für Retentat bzw. Permeat angeordnet. Ebenso ist auch nach dem Permeatausgang des letzten Moduls in Fig. 3 ein Servoventil 16 und anschliessend eine Umwälzpumpe 14 in der Rückführleitung 43 des Permeatkreislaufes, sowie ein weiteres Servoventil 17 zum abführen des Permeates über einen Durchflussmesser 23 und eine Ausgangsleitung 18 angeordnet. Im Gegensatz zu der in ihrer Drehzahl regelbaren Umwälzpumpe 14 aus Fig. 1 ist der Pumpe 14 in Fig. 3 noch ein Servoventil 14' zur Regelung des Durchflusses im Permeatkreislauf nachgeordnet.

Eine Regelstufe 24 wirkt ähnlich wie in Fig. 1 auf die Servoventile 16 und 17 und zusätzlich auf das Ventil 14', sowie auf die Ventile 33, 37 im Retentatkreislauf. Mit Hilfe der Messignale von den Druckmessonden 19, 20, 21, 22 und von den Durchflussmessern 23, 34 erfolgt in der Anlage gemäss Fig. 3 die Anpassung des Permeatdruckes an den Retentatdruck durch die Regelstufe 24 zur Erzielung eines gleichmässigen mittleren Transmembrandruckes (TMP).

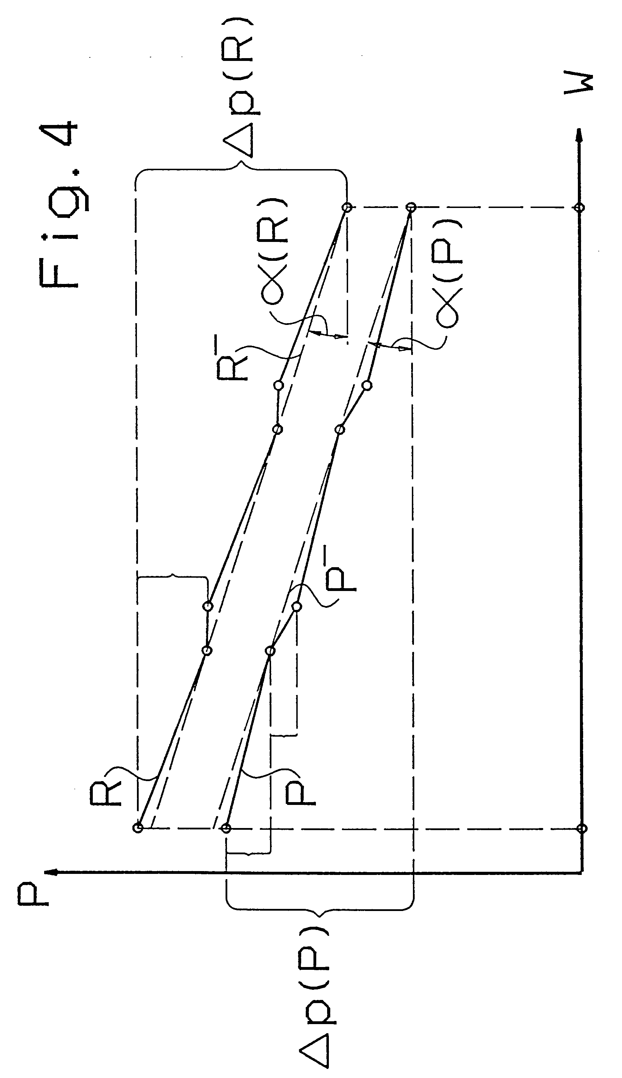

Fig. 4 zeigt ähnlich wie Fig. 2 den Druckverlauf im Retentat R und im Permeat P bei einer Mehrmodulanlage gemäss Fig. 3 längs des Weges W zwischen dem Eintritt in ein erstes Modul 1 und dem Austritt aus einem dritten Modul 1 einer Serie von nur drei Modulen. Die Anpassung des Druckverlaufes im Permeat erfolgt hier durch Drosseln 38 im Permeatkreislauf zwischen des Modulen 1 gemäss Fig. 3, die Grösse des Förderstromes wird durch die Umwälzpumpe 14 in Verbindung mit dem Servoventil 14' geregelt. Das gesamte Druckgefälle Δp(R) im Retentat setzt sich, wie Fig. 4 zeigt, aus drei Druckgefällen in den drei Modulen 1 zusammen. Die Druckverluste in den Retentatverbindungen 35 zwischen den Modulen sind vernachlässigbar klein.

Das gesamte permeatseitige Druckgefälle Δp(P) setzt sich zusammen aus drei Druckgefällen in den drei Modulen 1 und aus zwei dazwischen liegenden kürzeren Druckverlusten an den Drosseln 38 in den Permeatverbindungen. Eine Betrachtung der durch unterbrochene Linien P⁻ und R⁻ in Fig. 4 dargestellten mittleren Druckverläufe im Permeat und im Retentat zeigt, dass der mittlere Transmembrandruck (TMP) als Differenz von P⁻ und R⁻ über alle drei in Serie geschalteten Module konstant bleibt, weil die Neigungswinkel α(P) und α(R) von P⁻ und R⁻ übereinstimmen.

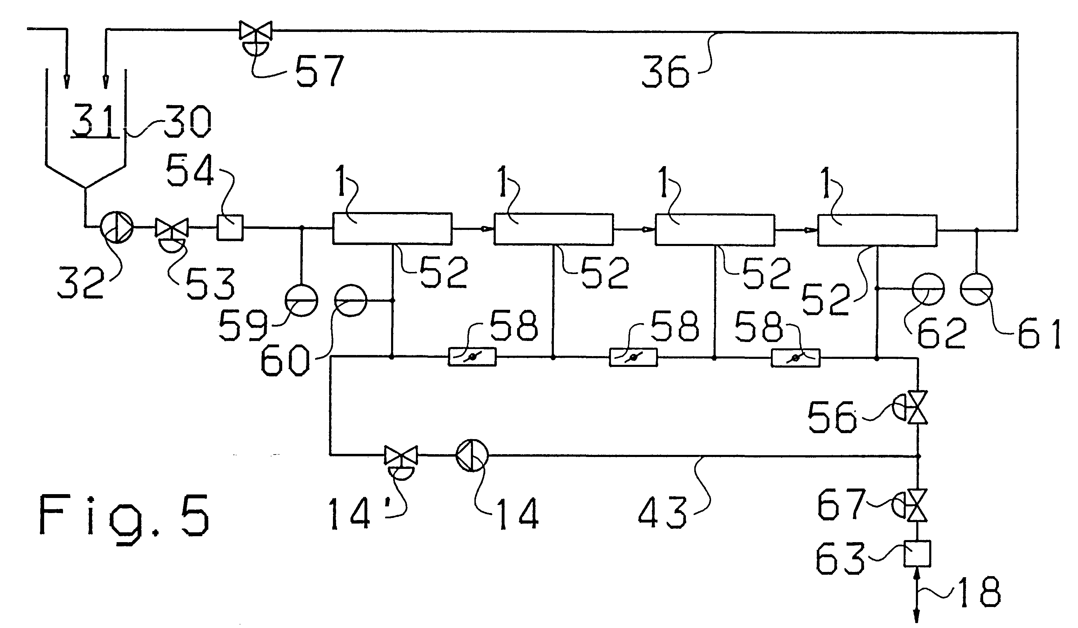

Fig. 5 zeigt schematisch eine Membranfilteranlage, bei der vier Module 1 mit Querstromfiltern in Serie geschaltet sind. Im Gegensatz zu den Modulen gemäss Fig. 3 weisen die Permeatkammern der Module 1 gemäss Fig. 5 je nur einen Permeatanschluss 52 auf. In diesem Fall ist jedes Modul 1 permeatseitig an einen Permeatkreislauf 43 angeschlossen, welcher ganz ausserhalb der Module 1 verläuft. Die Anschlusstellen der Module 1 am Permeatkreislauf 43 sind über Drosseln 58 verbunden. Druckmessonden 59 bzw. 60 an den Eingängen des ersten Moduls 1 und 61 bzw. 62 an den Ausgängen des vierten Moduls 1 für das Retentat bzw. das Permeat entsprechen den Druckmessonden gemäss Fig. 3, nur ist gemäss Fig. 5 keine Regelstufe vorgesehen, so dass die Messgeräte abgelesen werden müssen und keine Signalleitungen aufweisen. Weisen die Permeatkammern der Module, ähnlich den Fig. 1 und 3 mehr als einen Anschluss auf, so lassen sich diese Anschlüsse je Modul untereinander verbinden und die Drosseln 58 gemäss Fig. 5 zwischen die Verbindungsbereiche schalten.

Ebenso sind entsprechend Fig. 3 Ventile 56 bzw. 67 zur Steuerung von Permeatdurchfluss bzw. Permeatabfluss, sowie Ventile 53, 57 zur Steuerung des Retentatdurchflusses aufgrund der Ablesungen der Sonden 59, 60, 61, 62 und von Durchflussmessern 54 und 63 vorgesehen. Die übrigen Bezugszeichen in Fig. 5 bezeichnen Bauelemente mit der Fig. 3 entsprechender Funktion. Auch mit der Anlage gemäss Fig. 5 lässt sich der Transmembrandruck (TMP) über mehrere in Serie geschaltete Module 1 gleich und konstant halten.

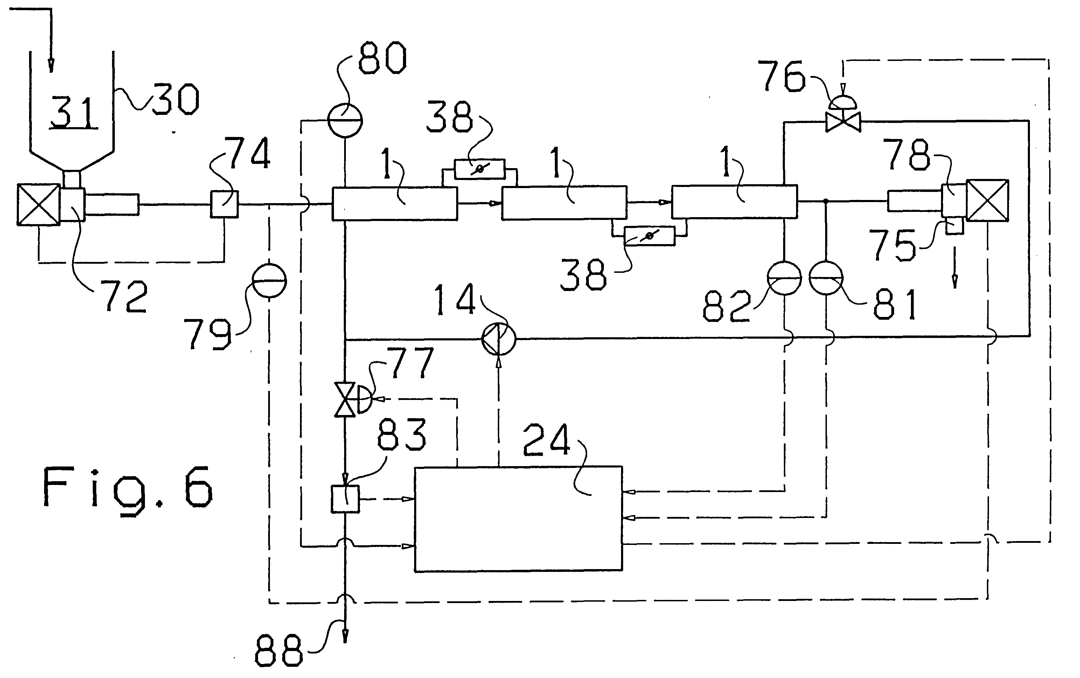

Fig. 6 zeigt eine Filtrationsanlage, mit der in kontinuierlichem Betrieb stark feststoffhaltige Produkte wie Fruchtmaischen oder Kommunalschlämme entsaftet oder entwässert werden können. Hierfür sind drei Module 1 für Querstromfilter vorgesehen, welche das Produkt 31, von einem Tank 30 ausgehend, ohne Kreislauf nur einmal durchläuft. Es sind auch Anordnungen mit Rückführung des Retentates in den Tank 30 möglich. Die geringe Anzahl von drei Modulen 1 dient nur der deutlicheren Darstellung, in industriellen Anlagen dieser Art werden üblicherweise bis 40 Module in Serie eingesetzt.

Da der Durchsatz der aufkonzentrierten Feststoffe als Retentat nicht durch Drosselventile, wie in den Fig. 3 und 5 steuerbar ist, weist die Anlage gemäss Fig. 6 hierzu je eine gesteuerte Exzenterschneckenpumpe 72, 78 am Eingang und am Ausgang der Serie der Module 1 auf. Die Pumpe 72 ist durch das Ausgangssignal eines in der Retentatleitung nachgeschalteten Durchflussmessers 74 gesteuert, und die Pumpe 78 arbeitet, vom Ausgangssignal einer Drucksonde 79 am Retentateingang des ersten Moduls 1 gesteuert, mit der Pumpe 72 zusammen. Die aufkonzentrierten Feststoffe verlassen die Anlage über eine Ausgangsleitung 75 an der Pumpe 78.

Der Permeatkreislauf gemäss Fig. 6 ist ähnlich jenem gemäss Fig. 3 aufgebaut. Am Anfang und am Ende der Serie von Modulen 1 sind Drucksonden 80 und 82 für das Permeat angeordnet, deren Ausgangssignale über Leitungen einer Regelstufe 24 zugeführt sind. Zwischen den Modulen 1 dienen Drosseln 38 der Druckanpassung im Permeatkreislauf. Der Permeat-Durchfluss ist durch ein Servoventil 76 und eine Pumpe 14 und das Permeat-Druckniveau durch ein Servoventil 77 über Signalleitungen von der Regelstufe 24 her regelbar. Die Regelstufe 24 erhält Messignale von den Drucksonden 80, 82, von einer Drucksonde 81 für das Retentat am Ausgang des letzten Moduls 1 und von einem Durchflussmesser 83 für das Permeat an einer Ausgangsleitung 88.

Die in den Modulen 1 eingebauten Querstromfilter können Öffnungen in den Bereichen sehr grobporig bis zu feinporig aufweisen. Die Qualität der Regelung des Transmembrandruckes (TMP) erlaubt den Betrieb mit relativ weiten Poren in unverstopftem Zustand. So können z.B. auch gelochte oder geschlitzte Metallrohre als Querstromfilter eingesetzt werden. Die mögliche Einregelung geringer TMP erlaubt eine wesentliche Reduzierung der Strömungsscherung an der Filteroberfläche im Retentat. Dies hat wiederum eine reduzierte Feintrubbildung im Permeat und einen reduzierten erforderlichen Förderdruck für den Retentatstrom, auch in den letzten Modulen einer Serie zur Folge. Es ist dadurch möglich, trotz relativ kleiner Retentat-Querschnitte mit einer grossen Anzahl Module in Serien mit Längen bis 50 m zu arbeiten. Auch wird die Filtrationsleistung mit den beschriebenen Massnahmen und Vorrichtungen ganz erheblich erhöht. Der Konzentrationsgrad des Retentates lässt sich noch erhöhen, indem man mehrere Anlagen der beschriebenen Art hintereinander schaltet.

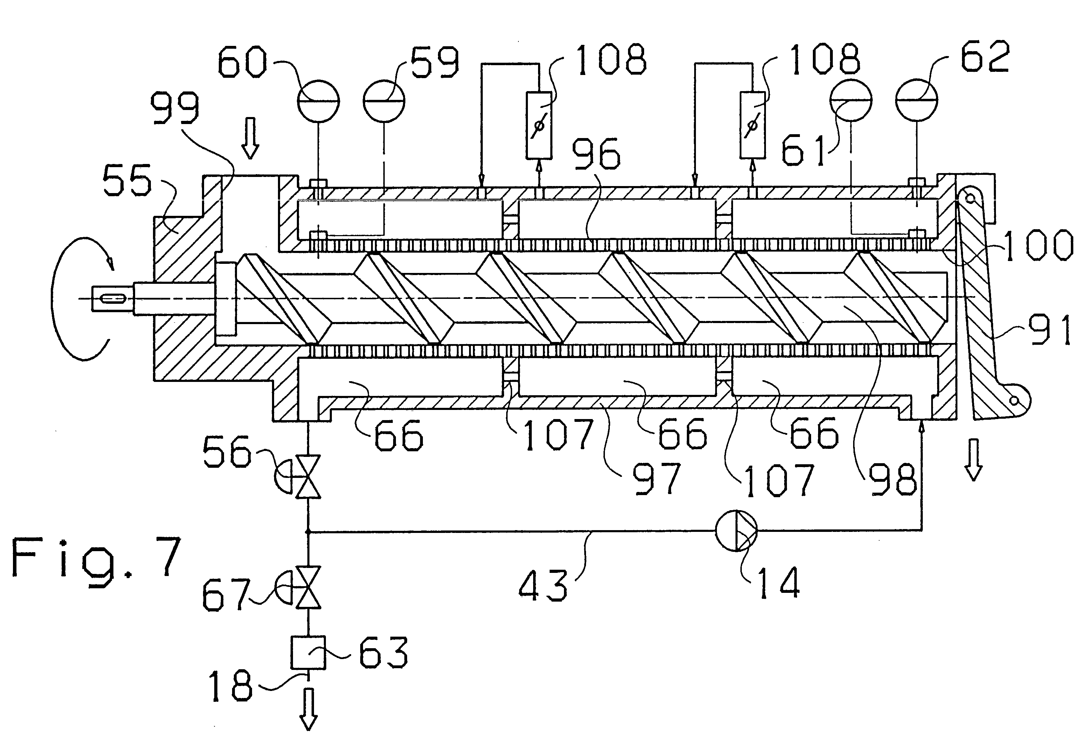

Fig. 7 zeigt eine Schneckenpresse, welche mit Vorrichtungen zur Anwendung des erfindungsgemässen Verfahrens ausgerüstet ist. In einem Gehäuse 55 ist ein gelochter Pressmantel 96 und ein Permeatmantel 97 eingebaut. Eine Schnecke 98 ist zentral im Pressmantel 96 angeordnet. Sie wird über einen nicht mit dargestellten Antrieb in Rotation versetzt, wobei sie über einen Einlass 99 das zu trennende Produkt einzieht und in Richtung einer Ausstossöffnung 100 fördert. Zur Einstellung des Pressdruckes ist an der Ausstossöffnung 100 eine Klappe 91 vorgesehen, mit welcher ein Gegendruck gegen den Förderstrom des Retentates längs der Schnecke 98 aufgebaut werden kann. Im Betrieb arbeitet man mit der Schneckenpresse so, dass unmittelbar nach der Einzugszone 99 ein geringer und unmittelbar vor der Ausstossöffnung 100 ein hoher Pressdruck im zu trennenden Pressgut vorliegt.

Der Permeatraum zwischen Pressmantel 96 und Permeatmantel 97 ist, wie Fig. 7 zeigt, in mehrere Permeatkammern 66 unterteilt, die über Strömungsblenden 107 und/oder verstellbare oder regelbare Drosseln 108 miteinander verbunden sind. Die Ausrüstung mit Vorrichtungen zur Durchführung des Verfahrens ist wieder ähnlich jener gemäss Fig. 5. Druckmessonden 59 bzw. 61 für das Retentat und 60 bzw. 62 für das Permeat am Einlass 99 bzw. an der Ausstossöffnung 100, eine Umwälzpumpe 14 und ein Servoventil 56 im Permeatkreislauf 43 sowie ein Servoventil 67 und ein Durchflussmesser 63 in der Auslassleitung 18 für das Permeat dienen der optimalen Einstellung des Permeatabflusses an der Leitung 18.

Im Gegensatz zu der Anlage gemäss Fig. 5 durchläuft das Permeat im Falle der Fig. 7 den Kreislauf 43 entgegengesetzt zur Durchlaufrichtung des Retentates in der Schnecke 98, wie die Anordnung der Pumpe 14 zeigt. Der Grund hierfür liegt in der erwähnten Umkehrung des Druckverlaufes im zu trennenden Pressgut. Die Nachbildung des Druckverlaufes im Retentat durch den Druckverlauf im Permeat kann mittels der zu Fig. 7 beschriebenen Anordnung über eine hier nicht mit dargestellte Regelstufe oder auch von Hand erfolgen. Eine Rückspülung des gelochten Pressmantels 96 als Filter kann man auch hier wieder erreichen, indem man das Servoventil 56 schliesst und mit der Pumpe 14 den Permeatdruck in den Permeatkammern 66 über den Retentatdruck hinaus erhöht, also einen negativen Transmembrandruck (TMP) erzeugt.

Die Anwendung des erfindungsgemässen Verfahrens bei Schneckenpressen ermöglicht eine Steigerung der Ausbeute und Leistung der Fest-Flüssigtrennung. Gleichzeitig erreicht man eine Reduktion der nicht gelösten Feststoffanteile im Permeat.

Über die beschriebenen bevorzugten Ausführungsbeispiele hinaus lassen sich das erfindungsgemässe Verfahren und die Vorrichtungen zu seiner Durchführung auch für anders aufgebaute Trennanlagen verwenden. Es sind alle Arten bekannter Querstromfilter in den Modulen verwendbar. Dabei liegen die Durchmesser der Porenöffnungen der Filter zwischen etwa 7 mm und (10 hoch -10) m. Die Mikrofiltration arbeitet mit Trenngrenzen von einigen (10 hoch -6) m, die Ultrafiltration bis (10 hoch -8) m und die Umkehrosmose bis (10 hoch -10) m. Gemäss ihrer Bauart eignen sich Plattenmodule, Wickelmodule, Rohrmodule, Mehrkanalmodule, Kapillarmodule, Haarfasermodule und andere.

Infolge der beschriebenen Regelung des Transmembran-Druckes (TMP) kann man mit einer wesentlich grösseren Anzahl Module in Serie arbeiten, als ohne diese Regelung, weil sich so zu hohe TMP mit ungünstiger Auswirkung auf die Flussleistung vermeiden lassen. Solche Anlagen mit einer Vielzahl von Membranen in Serie sind damit wesentlich wirtschaftlicher, wobei relativ klein dimensionierte Pumpen und Leitungen für den Betrieb genügen.

Eine derartige zuverlässig und genau arbeitende Regelung des Permeat-Druckes ermöglicht deshalb grosse Anzahlen von Membranmodulen in Serie, weil man mit Betriebsdrücken über dem Berstdruck der Membranrohre, jedoch mit Transmembrandrücken (TMP) unterhalb demselben arbeiten kann. Der wirksame Berstdruck ist nur durch den TMP gegeben. Andererseits lassen sich auch Retentate mit höheren Viskositäten verarbeiten.

## Patentansprüche

1. Verfahren zur Erhöhung der Filtrationsleistung von Querstromfiltern (9, 96) in Modulen (1) von Filteranlagen, bei denen das Retentat (7, 31) und das Permeat Kammern (8, 10, 66) durchlaufen und eine Transmembran-Druckdifferenz zwischen den Kammern auf beiden Seiten der Querstromfilter (9, 96) einstellbar ist, dadurch **gekennzeichnet**, dass die Kammern (10, 66) für das Permeat in einen Permeatkreislauf (13, 43) geschaltet werden, dass der Verlauf des Strömungswiderstandes im Permeatkreislauf (13, 43) so gewählt wird, dass er dem Strömungswiderstand in den Kammern (8) für das Retentat entspricht und dass der permeatseitige Druck, insbesondere der minimale Druck, und der Permeatdurchfluss im Permeatkreislauf (13, 43) so eingestellt werden, dass der Druckverlauf im Retentat längs der Querstromfilter (9, 96) durch den Druckverlauf im Permeat nachgebildet wird und die Transmembran-Druckdifferenz längs der Querstromfilter (9, 96) an wenigstens einer Stelle jedes Filters einen vorgegebenen Wert annimmt.

2. Verfahren nach Anspruch 1, dadurch **gekennzeichnet,** dass der Verlauf des Strömungswiderstandes im Permeatkreislauf (10) so eingestellt wird, dass der vorgegebene Wert für die Transmembran-Druckdifferenz längs der Querstromfilter (9) an allen Stellen aller Filter (9) gleich ist.

3. Verfahren nach Anspruch 1, dadurch **gekennzeichnet,** dass der Verlauf des Strömungswiderstandes im Permeatkreislauf durch feste, verstellbare, oder regelbare Fliesswiderstände (38, 58, 108) in Verbindungsleitungen zwischen den Modulen (1) einer Serienschaltung eingestellt wird.

4. Verfahren nach Anspruch 1, dadurch **gekennzeichnet**, dass die Nachbildung des Druckverlaufes längs der Querstromfilter (9, 96) im Retentat durch den Druckverlauf im Permeat nur aufgrund von Messungen der Eingangsdrücke von Permeat und Retentat am ersten Modul (1) der Filteranlage und der Ausgangsdrücke am letzten Modul (1) einer Serienschaltung erfolgt.

5. Verfahren nach Anspruch 1, dadurch **gekennzeichnet,** dass die Nachbildung des Druckverlaufes längs eines oder mehrerer Querstromfilter (9, 96) eines oder mehrerer Module (1) durch eine Regelung des Permeatdurchflusses im Permeatkreislauf aufgrund des Druckgefälles des Retentatstromes über diese Module erfolgt.

6. Verfahren nach Anspruch 1, dadurch **gekennzeichnet,** dass im Permeatkreislauf die Kammern für das Permeat von mehreren Modulen mit Querstromfiltern parallel geschaltet werden und dass die Querstromfilter in diesen Kammern gleichzeitig zwangsweise vom Permeat überströmt werden.

7. Verfahren nach Anspruch 1, dadurch **gekennzeichnet,** dass das Permeat aus dem Permeatkreislauf über eine Permeatdrossel (17, 67, 77) abgeführt wird und dass der Druck, insbesondere der minimale Druck im Permeatkreislauf durch eine Regelung der Permeatdrossel aufgrund des Ausgangsdruckes des Retentatstromes am letzten oder an einem diesem vorhergehenden Modul einer Serienschaltung eingestellt wird.

8. Verfahren nach Anspruch 1, dadurch **gekennzeichnet,** dass bei Filteranlagen, bei denen der Druck des Retentates beim Durchlaufen der Filtrationsmodule (1) abnimmt, die Strömungsrichtung des Permeates im Permeatkreislauf längs der Querstromfilter (9) gleichsinnig mit jener des Retentates gewählt wird.

9. Verfahren nach Anspruch 1, dadurch **gekennzeichnet,** dass bei Schneckenpressen als Filteranlagen, bei denen der Druck des Retentates beim Durchlaufen der Filtrationsmodule zunimmt, die Strömungsrichtung des Permeates im Permeatkreislauf längs der Querstromfilter (96) gegensinnig zu jener des Retentates gewählt wird.

10. Verfahren nach einem der Ansprüche 1 bis 9, dadurch **gekennzeichnet,** dass die Filtrationsleistung des Permeates gemessen wird und die Transmembran-Druckdifferenz längs der Querstromfilter (9, 96) als Funktion der Filtrationsleistung so verändert wird, dass die Filtrationsleistung ein Maximum erreicht.

11. Vorrichtung zur Erhöhung der Filtrationsleistung von Querstromfiltern (9, 96) in Modulen (1) von Filteranlagen, bei denen das Retentat und das Permeat Kammern (8, 10, 66) durchlaufen und eine Transmembran-Druckdifferenz zwischen den Kammern auf beiden Seiten der Querstromfilter einstellbar ist, **gekennzeichnet** durch einen Permeatkreislauf (13, 43), an welchen die Permeatkammern eines Modules (1) oder mindestens einer Serie von Modulen (1) angeschlossen sind, wobei die Kammern (10, 66) jedes Modules (1) für das Permeat über Leitungen in Serie verbunden sind und die Leitungen eine oder mehrere Pumpen (14) zur Umwälzung des Permeates aufweisen, sowie durch Mittel (19 - 22) zum Messen der Eingangs- und Ausgangsdrücke von Permeat und Retentat in den Querstromfiltern (9, 96).

12. Vorrichtung zur Erhöhung der Filtrationsleistung von Querstromfiltern (9, 96) in Modulen (1) von Filteranlagen, bei denen das Retentat und das Permeat Kammern (8, 10, 66) durchlaufen und eine Transmembran-Druckdifferenz zwischen den Kammern auf beiden Seiten der Querstromfilter einstellbar ist, **gekennzeichnet** durch einen Permeatkreislauf (43), an welchen die Permeatkammern der Module (1) einer Serie von mindestens zwei Modulen (1) angeschlossen sind, wobei die Kammern je zweier Module (1) für das Permeat durch je eine Teilleitung des Permeatkreislaufes (43) verbunden sind, welche zum Herbeiführen von Soll-Drücken in den Kammern geeignete Strömungswiderstände (58) aufweist, und wobei der Permeatkreislauf eine oder mehrere Pumpen (14) zur Umwälzung des Permeates umfasst, sowie durch Mittel (59 - 62) zum Messen der Eingangs- und Ausgangsdrücke von Permeat und Retentat in den Querstromfiltern der Module (1).

13. Vorrichtung nach Anspruch 11, **gekennzeichnet** durch mindestens zwei Serien von Modulen, welche vom Retentat parallel durchlaufen werden, wobei auch die den Modulserien entsprechenden Serien von Kammern für das Permeat im Permeatkreislauf parallel geschaltet sind, durch Mittel zur gleichzeitigen zwangsweisen Überströmung der Querstromfilter in diesen Permeatkammern durch das Permeat und durch einen zum Aussenraum offenen Puffertank, durch welchen der Permeatkreislauf als offener Kreislauf geführt ist.

14. Vorrichtung nach Anspruch 11, **gekennzeichnet** durch eines oder mehrere Module (1) im Permeatkreislauf (13, 36), welche an ihrer Retentat-Einlaufseite (3) bzw. Retentat-Auslaufseite (4) je mindestens einen Permeatanschluss (11, 12) aufweisen, durch die das Permeat beim Durchströmen der Permeatseiten der Module ein- bzw. austritt.

15. Vorrichtung nach Anspruch 11, **gekennzeichnet** durch eines oder mehrere Module im Permeatkreislauf, deren permeatseitige Kammern in mehrere Teilkammern (66) unterteilt sind, welche innerhalb (107) oder ausserhalb (108) der Module durch den Permeatkreislauf (43) verbunden sind.

16. Vorrichtung nach Anspruch 11, **gekennzeichnet** durch eines oder mehrere Module (1) mit rohrförmigen Querstromfiltern (9) im Permeatkreislauf (13), wobei die Module derart aufgebaut sind, dass die Filter (9) vom Permeat achsparallel, quer zur Rohrachse oder spiralartig überströmt werden.

17. Vorrichtung nach Anspruch 11, **gekennzeichnet** durch eines oder mehrere Module im Permeatkreislauf, welche mehrere rohrförmige Querstromfilter umfassen, welche im Modul gleichzeitig vom Permeat überströmt werden.

18. Vorrichtung nach Anspruch 11 oder 12, **gekennzeichnet** durch mindestens ein verstellbares oder regelbares Drosselventil (16, 56, 76), welches im Permeatkreislauf (13, 43) angeordnet ist.

19. Vorrichtung nach Anspruch 11 oder 12, **gekennzeichnet** durch mindestens eine Pumpe (14) zur Umwälzung des Permeates im Permeatkreislauf (13), deren Förderleistung verstellbar oder regelbar ist.

20. Vorrichtung nach Anspruch 11 oder 12, **gekennzeichnet** durch mindestens eine Pumpe (14) zur Umwälzung des Permeates im Permeatkreislauf (43), welcher in Förderrichtung ein Drosselventil (14') nachgeschaltet ist.

21. Vorrichtung nach Anspruch 11 oder 12, **gekennzeichnet** durch eine mit einem Drosselventil (17, 67, 77) versehene Leitung (18, 88), welche an den Permeatkreislauf (13, 43) angeschlossen ist.

22. Vorrichtung nach Anspruch 11 oder 12, **gekennzeichnet** durch mindestens eine feste Strömungsblende oder ein verstellbares oder regelbares Drosselventil (38, 58, 108), welche in mindestens einer Verbindungsleitung zwischen den Permeatkammern der Module (1) im Permeatkreislauf (43) angeordnet sind.

23. Vorrichtung nach Anspruch 18 oder 21, dadurch **gekennzeichnet,** dass das Drosselventil (16, 17, 76, 77) regelbar und mit einer Regelstufe (24) signalverbunden ist.

24. Vorrichtung nach Anspruch 11, **gekennzeichnet** durch Module der Filteranlage, welche mit innerhalb der Kammern für das Permeat liegenden Fliesswiderständen versehen sind.

25. Vorrichtung nach einem der Ansprüche 11-24, **gekennzeichnet** durch Module der Filteranlage, deren zulässiger Betriebsdruck niedriger liegt, als der tatsächlich verwendete retentatseitige Betriebsdruck.

## Claims

1. Method of increasing the filtration rate of cross-flow filters (9, 96) in modules (1) of filter plants, in which the retentate (7, 31) and the permeate pass through chambers (8, 10, 66) and a transmembrane pressure can be set between the chambers on both sides of the cross-flow filters (9, 96), characterised in that the chambers (10, 66) for the permeate are arranged in a permeate loop (13, 43), that the flow resistance profile in the permeate loop (13, 43) is selected in such a manner that it corresponds to the flow resistance in the chambers (8) for the retentate and that the pressure on the permeate side, in particular the minimum pressure, and the permeate flow through the permeate loop (13, 43) are set in such a manner that the pressure profile in the retentate along the cross-flow filters (9, 96) is simulated by the pressure profile in the permeate and the transmembrane pressure along the cross-flow filters (9, 96) adopts a predetermined value at least at one point of each filter.

2. Method according to claim 1, characterised in that the flow resistance profile in the permeate loop (10) is set in such a manner that the predetermined value for the transmembrane pressure along the cross-flow filters (9) is identical at all points of all of the filters (9).

3. Method according to claim 1, characterised in that the flow resistance profile in the permeate loop is set by fixed, adjustable or controllable flow resistors (38, 58, 108) in connecting lines between the modules (1) of a series arrangement.

4. Method according to claim 1, characterised in that the simulation of the pressure profile along the cross-flow filters (9, 96) in the retentate by the pressure profile in the permeate is effected only on the basis of measurements of the input pressures of the permeate and retentate at the first module (1) of the filter plant and the output pressures at the last module (1) of a series arrangement.

5. Method according to claim 1, characterised in that the simulation of the pressure profile along one or more cross-flow filters (9, 96) of one or more modules (1) is effected by controlling the permeate flow through the permeate loop on the basis of the pressure gradient of the retentate flow over these modules.

6. Method according to claim 1, characterised in that, in the permeate loop, the chambers for the permeate of several modules with cross-flow filters are arranged in parallel and that the permeate inevitably simultaneously flows over the cross-flow filters in these chambers.

7. Method according to claim 1, characterised in that the permeate is discharged from the permeate loop via a permeate flow restrictor (17, 67, 77) and that the pressure, in particular the minimum pressure, in the permeate loop is set by controlling the permeate flow restrictor on the basis of the output pressure of the retentate flow at the last module or at an earlier module of a series arrangement.

8. Method according to claim 1, characterised in that, in filter plants in which the pressure of the retentate decreases as it passes through the filtration modules (1), the flow direction of the permeate in the permeate loop along the cross-flow filters (9) is selected so that it is identical with that of the retentate.

9. Method according to claim 1, characterised in that, in screw presses serving as filter plants in which the pressure of the retentate increases as it passes through the filtration modules, the flow direction of the permeate in the permeate loop along the cross-flow filters (96) is selected so that it is the opposite to that of the retentate.

10. Method according to one of claims 1 to 9, characterised in that the filtration rate of the permeate is measured and the transmembrane pressure along the cross-flow filters (9, 96) is varied as a function of the filtration rate in such a manner that the filtration rate reaches a maximum.

11. Device for increasing the filtration rate of cross-flow filters (9, 96) in modules (1) of filter plants, in which the retentate and the permeate pass through chambers (8, 10, 66) and a transmembrane pressure can be set between the chambers on both sides of the cross-flow filters, characterised by a permeate loop (13, 43) to which the permeate chambers of a module (1) or at least a series of modules (1) are connected, the chambers (10, 66) of each module (1) for the permeate being connected in series via lines and the lines having one or more pumps (14) for circulating the permeate, and by means (19 - 22) for measuring the input and output pressures of the permeate and retentate in the cross-flow filters (9, 96).

12. Device for increasing the filtration rate of cross-flow filters (9, 96) in modules (1) of filter plants, in which the retentate and the permeate pass through chambers (8, 10, 66) and a transmembrane pressure can be set between the chambers on both sides of the cross-flow filters, characterised by a permeate loop (43) to which the permeate chambers of the modules (1) of a series consisting of at least two modules (1) are connected, the chambers of every two modules (1) for the permeate being connected by a partial line of the permeate loop (43) having suitable flow resistors (58) to produce required pressures in the chambers, and the permeate loop including one or more pumps (14) for circulating the permeate, and by means (59 - 62) for measuring the input and output pressures of the permeate and retentate in the cross-flow filters of the modules (1).

13. Device according to claim 11, characterised by at least two series of modules through which the retentate passes in parallel, the series of chambers for the permeate in the permeate loop corresponding to the module series also being arranged in parallel, by means for ensuring that the permeate inevitably simultaneously flows over the cross-flow filters in these permeate chambers and by a buffer tank open towards the exterior through which the permeate loop in the form of an open loop is guided.

14. Device according to claim 11, characterised by one or more modules (1) in the permeate loop (13, 36) provided at the retentate inlet side (3) and at the retentate outlet side (4) with at least one respective permeate port (11, 12) through which the permeate enters or exits when it flows through the permeate sides of the modules.

15. Device according to claim 11, characterised by one or more modules in the permeate loop, the chambers of which on the permeate side are divided into several partial chambers (66) connected within (107) or outside (108) the modules by the permeate loop (43).

16. Device according to claim 11, characterised by one or more modules (1) with tubular cross-flow filters (9) in the permeate loop (13), the modules being designed in such a manner that the permeate flows over the filters (9) in an axially parallel manner, transversely to the axis of the tube or helically.

17. Device according to claim 11, characterised by one or more modules in the permeate loop including several tubular cross-flow filters over which the permeate simultaneously flows in the module.

18. Device according to claim 11 or claim 12, characterised by at least one adjustable or controllable throttle valve (16, 56, 76) arranged in the permeate loop (13, 43).

19. Device according to claim 11 or claim 12, characterised by at least one pump (14) for circulating the permeate in the permeate loop (13), the output of which is adjustable or controllable.

20. Device according to claim 11 or claim 12, characterised by at least one pump (14) for circulating the permeate in the permeate loop (43) with a downstream throttle valve (14') as viewed in the output direction.

21. Device according to claim 11 or claim 12, characterised by a line (18, 88) provided with a throttle valve (17, 67, 77) and connected to the permeate loop (13, 43).

22. Device according to claim 11 or claim 12, characterised by at least one fixed flow orifice or an adjustable or controllable throttle valve (38, 58, 108) arranged in at least one connecting line between the permeate chambers of the modules (1) in the permeate loop (43).

23. Device according to claim 18 or claim 21, characterised in that the throttle valve (16, 17, 76, 77) is controllable and is connected to a control stage (24) with a communication link.

24. Device according to claim 11, characterised by modules of the filter plant provided with flow resistors situated within the chambers for the permeate.

25. Device according to one of claims 11-24, characterised by modules of the filter plant, the permissible operating pressure of which is lower than the operating pressure actually used at the retentate side.

## Revendications

1. Procédé pour augmenter la performance de filtration de filtres à courant transversal (9, 96) dans des modules (1) d'installations de filtration, dans lesquelles le rétentat (7, 31) et le perméat traversent des chambres (8, 10, 66) et dans lesquelles peut être ajustée une pression différentielle transmembrane entre les chambres des deux côtés des filtres à courant transversal (9, 96), caractérisé en ce que les chambres de perméat (10, 66) se raccordent à un circuit de perméat (13, 43), en ce que la variation de la résistance hydraulique dans le circuit du perméat (13, 43) est choisie de telle sorte qu'elle corresponde à la résistance hydraulique dans les chambres du rétentat (8), et en ce que la pression côté perméat, en particulier la pression minimale, et la circulation du perméat dans le circuit du perméat (13, 43) sont ajustées de telle sorte que la marche de la pression dans le rétentat le long des filtres à courant transversal (9, 96) reproduise la marche de la pression dans le perméat et que la pression différentielle transmembrane le long des filtres à courant transversal (9, 96), au moins en un point de chaque filtre, adopte une valeur prédéfinie.

2. Procédé selon la revendication 1, caractérisé en ce que la variation de la résistance hydraulique dans le circuit du perméat (10) est ajustée de telle sorte que la valeur de pression différentielle transmembrane prédéfinie le long des filtres à courant transversal (9) est identique en tous points des filtres dans leur totalité (9).

3. Procédé selon la revendication 1, caractérisé en ce que la variation de la résistance hydraulique dans le circuit du perméat est ajustée par des systèmes faisant résistance à l'écoulement fixes, ajustables ou régulables (38, 58, 108) dans des conduites de raccordement entre les modules (1) d'un montage en série.

4. Procédé selon la revendication 1, caractérisé en ce que la reproduction de la marche de la pression le long des filtres à courant transversal (9, 96) dans le rétentat par la marche de la pression dans le perméat ne s'opère que sur la base de mesures des pressions d'entrée du perméat et du rétentat au niveau du premier module (1) de l'installation de filtration et des pressions de sortie au niveau du dernier module (1) d'un montage en série.

5. Procédé selon la revendication 1, caractérisé en ce que la reproduction de la marche de la pression le long d'un ou de plusieurs filtre(s) à courant transversal (9, 96) d'un ou de plusieurs module(s) (1) s'opère par une régulation de la circulation du perméat dans le circuit du perméat sur la base des différences de pression du courant de rétentat traversant ces modules.

6. Procédé selon la revendication 1, caractérisé en ce que les chambres de perméat de plusieurs modules avec les filtres à courant transversal sont montées en parallèle dans le circuit du perméat et en ce que les filtres à courant transversal dans ces chambres sont par alimentation forcée simultanément recouverts par le perméat.

7. Procédé selon la revendication 1, caractérisé en ce que le perméat provenant du circuit du perméat est évacué via un système d'étranglement du perméat (17, 67, 77), et en ce que la pression, en particulier la pression minimale dans le circuit du perméat, est ajustée par une régulation du système d'étranglement du perméat sur la base de la pression de sortie du courant de rétentat au niveau du dernier module, ou de l'un des modules le précédant, d'un montage en série.

8. Procédé selon la revendication 1, caractérisé en ce que, dans les installations de filtration dans lesquelles la pression du rétentat baisse lorsque celui-ci traverse les modules de filtration (1), la direction de l'écoulement du perméat dans le circuit du perméat le long des filtres à courant transversal (9) est choisie de même sens que celle du rétentat.

9. Procédé selon la revendication 1, caractérisé en ce que, dans le cas d'installations de filtration de type presses à vis, dans lesquelles la pression du rétentat augmente lorsqu'il traverse les modules de filtration, la direction de l'écoulement du perméat dans le circuit du perméat le long des filtres à courant transversal (96) est choisie à l'inverse de celle du rétentat.

10. Procédé selon l'une des revendications 1 à 9, caractérisé en ce que la performance de filtration du perméat est mesurée et que la pression différentielle transmembrane le long des filtres à courant transversal (9, 96), en tant que fonction de la performance de filtration, est modifiée de telle sorte que la performance de filtration atteint une valeur maximum.

11. Dispositif pour augmenter la performance de filtration de filtres à courant transversal (9, 96) dans des modules (1) d'installations de filtration, dans lesquelles le rétentat et le perméat traversent des chambres (8, 10, 66) et dans lesquelles peut être ajustée une pression différentielle transmembrane entre les chambres des deux côtés des filtres à courant transversal, caractérisé par un circuit du perméat (13, 43), auquel sont raccordées les chambres de perméat d'un module (1) ou au moins d'une série de modules (1), les chambres de perméat (10, 66) de chaque module (1) étant reliées en série via des conduites, et les conduites comportant une ou plusieurs pompe(s) (14) pour faire circuler le perméat, ainsi que par des moyens (19-22) pour mesurer les pressions d'entrée et de sortie du perméat et du rétentat dans les filtres à courant transversal (9, 96).

12. Dispositif pour augmenter la performance de filtration de filtres à courant transversal (9, 96) dans des modules (1) d'installations de filtration, dans lesquelles le rétentat et le perméat traversent des chambres (8, 10, 66) et dans lesquelles peut être ajustée une pression différentielle transmembrane entre les chambres des deux côtés des filtres à courant transversal, caractérisé par un circuit du perméat (43), auquel sont raccordées les chambres de perméat des modules (1) d'une série d'au moins deux modules (1), les chambres de perméat de deux modules (1) étant chaque fois reliées par une conduite partielle du circuit du perméat (43), qui présente les résistances hydrauliques (58) appropriées pour générer les pressions de consigne dans les chambres, le circuit du perméat englobant une ou plusieurs pompe(s) (14) pour faire circuler le perméat, ainsi que par des moyens (59-62) pour mesurer les pressions d'entrée et de sortie du perméat et du rétentat dans les filtres à courant transversal des modules (1).

13. Dispositif selon la revendication 11, caractérisé par au moins deux séries de modules qui sont traversés parallèlement par le rétentat, les séries de chambres de perméat correspondant aux séries de modules étant également montées en parallèle dans le circuit du perméat, par des moyens pour, par alimentation forcée, recouvrir simultanément par le perméat les filtres à courant transversal dans ces chambres de perméat, et par un réservoir tampon ouvert vers l'enceinte extérieure à travers lequel le circuit du perméat est guidé sous la forme d'un circuit ouvert.

14. Dispositif selon la revendication 11, caractérisé par un ou plusieurs module(s) (1) dans le circuit du perméat (13, 36), qui comporte(nt) côté admission du rétentat(3) ou, selon les cas, côté évacuation du rétentat (4) chaque fois au moins un raccord pour le perméat (11, 12) par lequel entre et/ou sort le perméat, lorsque sont traversés les côtés perméat des modules.

15. Dispositif selon la revendication 11, caractérisé par un ou plusieurs module(s) dans le circuit du perméat, dont les chambres côté perméat sont subdivisées en plusieurs chambres partielles (66), qui, à l'intérieur (107) ou à l'extérieur (108) des modules sont reliées par le circuit du perméat (43).

16. Dispositif selon la revendication 11, caractérisé par un ou plusieurs module(s) (1) avec des filtres à courant transversal (9) de type tubulaire dans le circuit du perméat (13), les modules étant construits de telle sorte que les filtres (9) sont recouverts par le perméat parallèlement à l'axe, transversalement à l'axe du tuyau, ou encore en spirales.

17. Dispositif selon la revendication 11, caractérisé par un ou plusieurs module(s) dans le circuit du perméat, qui englobe(nt) plusieurs filtres à courant transversal de type tubulaire, qui sont simultanément recouverts de perméat dans le module.

18. Dispositif selon la revendication 11 ou 12, caractérisé par au moins une soupape d'étranglement ajustable ou régulable (16, 56, 76) qui est placée dans le circuit du perméat (13, 43).

19. Dispositif selon la revendication 11 ou 12, caractérisé par au moins une pompe (14) pour faire circuler le perméat dans le circuit du perméat (13), dont la capacité de refoulement est ajustable ou régulable.

20. Dispositif selon la revendication 11 ou 12, caractérisé par au moins une pompe (14) pour faire circuler le perméat dans le circuit du perméat (43), à la suite de laquelle est intercalée une soupape d'étranglement (14') dans le sens du refoulement.

21. Dispositif selon la revendication 11 ou 12, caractérisé par une conduite (18, 88) pourvue d'une soupape d'étranglement (17, 67, 77), qui est raccordée au circuit du perméat (13, 43).

22. Dispositif selon la revendication 11 ou 12, caractérisé par un système d'obturation d'écoulement fixe ou par au moins une soupape d'étranglement (38, 58, 108), ajustable ou régulable, qui est disposé dans au moins une conduite de raccordement entre les chambres de perméat des modules (1) dans le circuit du perméat (43).

23. Dispositif selon la revendication 18 ou 21, caractérisé en ce que la soupape d'étranglement (16, 17, 76, 77) peut être régulée et en ce qu'elle est reliée par signaux à un système de réglage (24).

24. Dispositif selon la revendication 11, caractérisé par des modules d'installation de filtration qui sont pourvus de systèmes de résistance à l'écoulement disposés à l'intérieur des chambres de perméat.

25. Dispositif selon l'une des revendications 11 à 24, caractérisé par des modules d'installation de filtration, dont la pression de service autorisée est inférieure à la pression de service utilisée effectivement côté rétentat.
